# EUROPÄISCHE PATENTANMELDUNG

(11) **EP 4 050 698 A2**
(43) Veröffentlichungstag der Anmeldung: **31.08.2022**
(21) Anmeldenummer: 22155942.0
(22) Anmeldetag: 09.02.2022
(51) Int. Cl.: H01M 10/48

(54) **BATTERIEZELLE MIT TRENNVORRICHTUNG, BATTERIESYSTEM UND KRAFTFAHRZEUG**

(30) Priorität: 26.02.2021 DE 102021104722
(71) Anmelder: VOLKSWAGEN AG, 38440 Wolfsburg (DE)
(72) Erfinder: Lackenmacher, Lutz, 38531 Rötgesbüttel (DE); Arndt, Carolin, 38114 Braunschweig (DE); Hennig, Dr. Jakob, 38124 Braunschweig (DE); Klink, Marcus, 38228 Salzgitter (DE); Wesche, Frank, 38458 Velpke (DE); Misir, Dr. Onur, 30455 Hannover (DE)
(74) Vertreter: Bals & Vogel Patentanwälte PartGmbB

(57) **Zusammenfassung**

Die vorliegende Erfindung betrifft eine Batteriezelle (1) für ein Batteriesystem (2) für ein Kraftfahrzeug (3), aufweisend eine flexible Zellwandung (4), einen von der Zellwandung (4) gebildeten Zellinnenraum (5), in dem Zellinnenraum (5) angeordnetes Aktivmaterial (6) zum Speichern und Freigeben der elektrischen Energie sowie eine Ableitervorrichtung (7) zum Bereitstellen einer elektrischen Kopplung des Aktivmaterials (6) mit weiteren Komponenten des Batteriesystems (2), wobei die Ableitervorrichtung (7) einen ersten Ableiterabschnitt (7a) und einen mit dem ersten Ableiterabschnitt (7a) mechanisch sowie elektrisch gekoppelten zweiten Ableiterabschnitt (7b) aufweist. Die Batteriezelle (1) weist eine Trennvorrichtung (8) zum Trennen der mechanischen und elektrischen Kopplung sowie eine Aktuatorvorrichtung (9) zum Bewegen der Trennvorrichtung (8) in Abhängigkeit eines Druckunterschieds zwischen einem Zellinnendruck und einem Zellaußendruck auf. Ferner betrifft die Erfindung ein Batteriesystem (2) und ein Kraftfahrzeug (3).

## Beschreibung

Die vorliegende Erfindung betrifft eine Batteriezelle für ein Batteriesystem für ein Kraftfahrzeug. Ferner betrifft die Erfindung ein Batteriesystem für ein Kraftfahrzeug mit einer gattungsgemäßen Batteriezelle sowie ein Kraftfahrzeug mit einem gattungsgemäßen Batteriesystem.

Es sind zylindrische sowie prismatische Batteriezellen bekannt, die zum Schutze der Batteriezelle, insbesondere vor einem thermischen Durchgehen, eine Sicherheitsvorrichtung, wie beispielsweise ein Current Interrupt Device (CID) oder ein Overcharging Safety Device (OSD), aufweisen. Üblicherweise weisen derartige Sicherheitsvorrichtungen eine Sicherheitsschaltung auf, welche bei einem kritischen Innendruck, einer kritischen Innentemperatur oder einer kritischen Gaskonzentration innerhalb der Zelle eine elektrische Kopplung zwischen dem Aktivmaterial der Batteriezelle, welches beispielsweise zu einem Zellwickel zusammengefasst ist, und einen aus der Batteriezelle herausgeführten elektrischen Pol unterbricht. Derartige Sicherheitsvorrichtungen sind für als Pouchzellen ausgebildete Batteriezellen derzeit nur sehr aufwendig umsetzbar.

Aus der DE 10 2016 110 778 A1 ist eine als Pouchzelle ausgebildete Batteriezelle mit einer Schutzvorrichtung bekannt, bei welcher eine elektrische Kopplung eines ersten Innenleiters der Batteriezelle mit einem zweiten Innenleiter der Batteriezelle in Abhängigkeit einer Ausdehnung der Batteriezelle trennbar ist. Hierfür ist der zweite Innenleiter an einer unteren Zellwandung gehalten, beispielsweise über eine Klebeschicht, und über einen Biegeabschnitt mit einem ersten Abschnitt des ersten Innenleiters elektrisch gekoppelt. Der erste Abschnitt ist an einer oberen Zellwandung der Batteriezelle gehalten, beispielsweise über eine Klebeschicht, und über eine Sollbruchstelle mit einem zweiten Abschnitt des ersten Innenleiters elektrisch gekoppelt. Der zweite Abschnitt ist über eine elektrisch isolierende Klebeschicht an dem zweiten Innenleiter gekoppelt. Bei einer kritischen Ausdehnung der Batteriezelle ist die obere Zellwandung derart von der unteren Zellwandung entfernt, dass der Biegeabschnitt zumindest teilweise plastisch verformt und die Sollbruchstelle aufgebrochen ist. Die elektrische Kopplung zwischen dem ersten Abschnitt und dem zweiten Abschnitt des ersten Innenleiters ist somit unterbrochen. Auf diese Weise ist die Batteriezelle automatisch von einem restlichen Batteriesystem abtrennbar. Der Biegebereich ist ausgebildet, bei einer Rückverformung der Batteriezelle etwas von der plastischen Verformung beizubehalten, sodass eine Unterbrechung der elektrischen Kopplung zwischen dem ersten Abschnitt und dem zweiten Abschnitt des ersten Innenleiters weiterhin bestehen bleibt.

Bekannte als Pouchzellen ausgebildete Batteriezellen mit einer Schutzvorrichtung haben den Nachteil, dass zum Unterbrechen der elektrischen Kopplung eine größere Verformung einer Zellwandung erforderlich ist. Dies ist insbesondere bei Batteriesystemen mit einer Druckvorrichtung problematisch, mittels welcher die Batteriezellen zur Steigerung der Leistungsfähigkeit sowie zur Erhöhung der Lebensdauer zusammendrückbar sind. Ein weiterer Nachteil ist, dass bei einer hohen Strombelastung und zu langsamen Auftrennen der elektrischen Kopplung ein Lichtbogen entstehen kann, über welchen zunächst ein Strom fließt. Hierdurch entsteht Wärme durch die eine Verschweißung der zuvor getrennten Elemente des Ableiters erfolgen kann. Die Elemente sind dann wieder miteinander elektrisch gekoppelt.

Es ist daher Aufgabe der vorliegenden Erfindung, die voranstehend beschriebenen Nachteile bei einer Batteriezelle zu beheben oder zumindest teilweise zu beheben. Insbesondere ist es Aufgabe der vorliegenden Erfindung eine Batteriezelle, ein Batteriesystem und ein Kraftfahrzeug zu schaffen, die auf eine einfache und kostengünstige Art und Weise eine verbesserte Unterbrechung der elektrischen Kopplung einer defekten Batteriezelle zu weiteren Batteriezellen des Batteriesystems sicherstellen.

Voranstehende Aufgabe wird durch die Patentansprüche gelöst. Demnach wird die Aufgabe durch eine Batteriezelle für ein Batteriesystem für ein Kraftfahrzeug mit den Merkmalen des unabhängigen Anspruchs 1, durch ein Batteriesystem für ein Kraftfahrzeug mit den Merkmalen des nebengeordneten Anspruchs 9 sowie durch ein Kraftfahrzeug mit den Merkmalen des nebengeordneten Anspruchs 10 gelöst.

Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Batteriezelle beschrieben sind, selbstverständlich auch im Zusammenhang mit dem erfindungsgemäßen Batteriesystem sowie dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch eine Batteriezelle für ein Batteriesystem für ein Kraftfahrzeug gelöst. Die Batteriezelle weist eine flexible Zellwandung, einen von der Zellwandung gebildeten Zellinnenraum, in dem Zellinnenraum angeordnetes Aktivmaterial zum Speichern und Freigeben der elektrischen Energie sowie eine Ableitervorrichtung zum Bereitstellen einer elektrischen Kopplung des Aktivmaterials mit weiteren Komponenten des Batteriesystems auf. Die Ableitervorrichtung weist einen ersten Ableiterabschnitt und einen mit dem ersten Ableiterabschnitt mechanisch sowie elektrisch gekoppelten zweiten Ableiterabschnitt auf. Erfindungsgemäß weist die Batteriezelle eine Trennvorrichtung zum Trennen der mechanischen und elektrischen Kopplung zwischen dem ersten Ableiterabschnitt und dem zweiten Ableiterabschnitt sowie eine Aktuatorvorrichtung zum Bewegen der Trennvorrichtung auf, wobei die Aktuatorvorrichtung ausgebildet ist, die Trennvorrichtung unter Ausnutzung eines positiven Druckunterschieds zwischen einem Zellinnendruck im Zellinnenraum und einem geringeren Zellaußendruck außerhalb des Zellinnenraums von einer Ausgangsposition in eine Unterbrechungsposition zwischen den ersten Ableiterabschnitt und den zweiten Ableiterabschnitt zu bewegen.

Das Batteriesystem ist vorzugsweise zum Betreiben eines Elektromotors und einer Leistungselektronik des Kraftfahrzeugs ausgebildet. Die Batteriezelle ist vorzugsweise als Pouchzelle ausgebildet. Die Zellwandung ist aus einem flexiblen Material gebildet, wie beispielsweise Aluminium, Kunststoff oder dergleichen. Vorzugsweise ist die Zellwandung folienartig ausgebildet. Ferner weist die Zellwandung mindestens eine Naht zum Bilden eines nach außen abgedichteten Zellinnenraums auf. Die Naht ist vorzugsweise als Schweißnaht, Klebenaht oder dergleichen ausgebildet.

Das Aktivmaterial ist im Zellinnenraum angeordnet. Unter einem Aktivmaterial wird im Rahmen der Erfindung ein Werkstoff bzw. ein Werkstoffgemisch verstanden, welches die Speicherung sowie Abgabe elektrischer Energie über Ableiter der Batteriezelle gewährleistet. Das Aktivmaterial weist vorzugsweise Lithiumionen auf. Das Aktivmaterial kann erfindungsgemäß in Schichtform, insbesondere gestapelt oder gefaltet, im Zellinnenraum angeordnet sein.

Die Ableitervorrichtung ist zum Bereitstellen der elektrischen Kopplung des Aktivmaterials mit weiteren Komponenten des Batteriesystems, wie beispielsweise weiteren Batteriezellen, insbesondere im Rahmen einer Serienschaltung oder Reihenschaltung, oder einem Hauptableiter des Batteriesystems zum Abgeben elektrischer Energie an elektrische Verbraucher des Kraftfahrzeugs sowie zum Einleiten elektrischer Energie zum Aufladen der Batteriezellen ausgebildet. Zur Bereitstellung der elektrischen Kopplung weist die Ableitervorrichtung den ersten Ableiterabschnitt und den zweiten Ableiterabschnitt auf.

Der erste Ableiterabschnitt ist mit dem zweiten Ableiterabschnitt mechanisch sowie elektrisch gekoppelt. Die mechanische und elektrische Kopplung des ersten Ableiterabschnitts mit dem zweiten Ableiterabschnitt kann beispielsweise durch Kleben, Crimpen, Pressen, Schweißen, Löten oder dergleichen hergestellt sein. Hierbei ist es bevorzugt, dass der erste Ableiterabschnitt und der zweite Ableiterabschnitt einen gemeinsamen Überlappungsbereich bilden. Der Überlappungsbereich weist vorzugsweise eine der Trennvorrichtung zugewandte Trennfuge auf. Vorzugsweise weist die Trennfuge eine Aufweitung auf, um ein Einführen der Trennvorrichtung in die Trennfuge zu verbessern. Alternativ kann erfindungsgemäß vorgesehen sein, dass ein Teil der Trennvorrichtung bereits innerhalb der Trennfuge angeordnet ist. Beim Pressen sind der erste Ableiterabschnitt und der zweite Ableiterabschnitt im Überlappungsbereich über eine Druckkraft gegeneinandergedrückt. Die Druckkraft kann beispielsweise durch eine innere Spannung des ersten Ableiterabschnitts und/oder des zweiten Ableiterabschnitts oder über eine zusätzliche Druckvorrichtung, wie beispielsweise eine Federvorrichtung, bereitgestellt sein.

Gemäß einer alternativen Ausführungsform können der erste Ableiterabschnitt und der zweite Ableiterabschnitt miteinander monolithisch ausgebildet sein. In diesen Fall ist es bevorzugt, wenn ein Zwischenbereich zwischen dem ersten Ableiterabschnitt und dem zweiten Ableiterabschnitt quer, besonders bevorzugt orthogonal, zur Trennvorrichtung angeordnet ist, sodass ein zuverlässiges Durchtrennen des Zwischenbereichs mittels der Trennvorrichtung gewährleistet ist. Der Übergangsbereich zwischen dem ersten Ableiterabschnitt und dem zweiten Ableiterabschnitt weist vorzugsweise eine Sollbruchstelle, einen Knick oder dergleichen auf.

Die Trennvorrichtung ist ausgebildet, in der Ausgangsposition die mechanische und elektrische Kopplung des ersten Ableiterabschnitts mit dem zweiten Ableiterabschnitt bestehen zu lassen und in der Unterbrechungsposition zu trennen. In der Unterbrechungsposition ist die Trennvorrichtung vorzugsweise zwischen dem ersten Ableiterabschnitt und dem zweiten Ableiterabschnitt angeordnet, sodass der erste Ableiterabschnitt vom dem zweiten Ableiterabschnitt beabstandet angeordnet ist. Vorzugsweise ist die Trennvorrichtung ausgebildet, in der Unterbrechungsposition die Zellwandung, beispielsweise an einer Nahtstelle, zu öffnen, sodass Zellgas aus dem Zellinnenraum entweichen kann. Weiter bevorzugt weist die Trennvorrichtung einen Endanschlag auf, der ausgebildet ist, eine Bewegung der Trennvorrichtung zu begrenzen, beispielsweise in der Unterbrechungsposition oder in Bewegungsrichtung von der Ausgangsposition hinter der Unterbrechungsposition, beispielsweise um ein Herausfallen der Trennvorrichtung aus der Batteriezelle zu vermeiden.

Die Aktuatorvorrichtung ist zum Bewegen der Trennvorrichtung von der Ausgangsposition in die Unterbrechungsposition in Abhängigkeit eines Verhältnisses des Zellinnendrucks und des Zellaußendrucks ausgebildet. Bei einer vollständig intakten Batteriezelle ist die Trennvorrichtung vorzugsweise in der Ausgangsposition angeordnet. Die Aktuatorvorrichtung ist zudem ausgebildet, diese Bewegung durch den positiven Druckunterschied zwischen dem Zellinnendruck und dem Zellaußendruck zu bewirken. Unter einem positiven Druckunterschied zwischen Zellinnendruck und Zellaußendruck wird im Rahmen der Erfindung verstanden, dass der Zellinnendruck größer ist als der Zellaußendruck. Ein Anstieg des Zellinnendrucks erfolgt üblicherweise in Folge chemischer Reaktionen des Aktivmaterials, insbesondere durch Alterung oder Überlastung. Demnach ist die Aktuatorvorrichtung mit dem Zellinnenraum mechanisch derart gekoppelt, dass ein Druckunterschied auf die Aktuatorvorrichtung wirkt.

Vorzugsweise ist die Aktuatorvorrichtung ausgebildet, die Trennvorrichtung erst dann in die Unterbrechungsposition zu bewegen, wenn der positive Druckunterschied einen Druckschwellwert übersteigt. Hierbei sind zwei alternative Ausführungen erfindungsgemäß bevorzugt. Gemäß einer ersten Ausführungsform ist die Aktuatorvorrichtung ausgebildet, die Trennvorrichtung erst dann aus der Ausgangsposition weg zu bewegen, wenn der Druckschwellwert erreicht ist. Die Bewegung der Trennvorrichtung in die Unterbrechungsposition erfolgt dann in einer verhältnismäßig schnellen stetigen Bewegung. Gemäß einer zweiten Ausführungsform ist die Aktuatorvorrichtung ausgebildet, die Trennvorrichtung bereits bei Auftreten eines verhältnismäßig geringen positiven Druckunterschieds eine entsprechend geringe Teilstrecke in Richtung der Unterbrechungsposition zu bewegen. Die Unterbrechungsposition wird erst dann erreicht, wenn der Druckschwellwert erreicht ist. Die Bewegung der Trennvorrichtung in die Unterbrechungsposition erfolgt dann in einer verhältnismäßig langsamen, möglicherweise unstetigen Bewegung.

Der Druckschwellwert ist vorzugsweise in Abhängigkeit mechanischer sowie chemischer bzw. elektrochemischer Kennwerte der Batteriezelle festgelegt und bestimmt, bei welchem Druckunterschied eine Trennung der elektrischen Kopplung der Batteriezelle vom Rest des Batteriesystems erfolgen soll, um weitere Schäden an der Batteriezelle sowie am Batteriesystem zu vermeiden oder zumindest zu reduzieren. Der Druckschwellwert liegt vorzugsweise unter einem kritischen Druckschwellwert bei welchem ein Öffnen der Nähte der Zellwandung droht. Auf diese Weise ist verhinderbar, dass Zellgas durch eine defekte Naht entweicht und somit der Druckschwellwert im Zellinnenraum nicht oder mit erheblicher Verzögerung, beispielsweise wenn die Batteriezelle bereits thermisch durchgeht, erreicht wird.

Die Batteriezelle weist vorzugsweise eine Signalvorrichtung auf, die zum Ausgeben eines Signals ausgebildet ist, wenn die Trennvorrichtung in der Unterbrechungsposition angeordnet ist. Vorzugsweise ist die Signalvorrichtung ausgebildet, wenn die Trennvorrichtung aus der Ausgangsposition herausbewegt ist, vorzugsweise wenn die Trennvorrichtung etwa 50% der Strecke zwischen der Ausgangsposition und der Unterbrechungsposition zurückgelegt hat. Die Signalvorrichtung weist vorzugsweise einen feststehenden ersten elektrischen Kontakt sowie einen mit der Trennvorrichtung mitbewegbaren zweiten elektrischen Kontakt auf. In der Ausgangsposition sind der erste elektrische Kontakt und der zweite elektrische Kontakt vorzugsweise voneinander getrennt. In der Unterbrechungsposition kontaktiert der erste elektrische Kontakt den zweiten elektrischen Kontakt, sodass ein Stromkreis geschlossen ist. Auf diese Weise ist das elektrische Abkoppeln einer konkreten Batteriezelle eines Batteriesystems zuverlässig sowie mit einfachen Mitteln und kostengünstig detektierbar.

Eine erfindungsgemäße Batteriezelle hat gegenüber herkömmlichen Batteriezellen den Vorteil, dass mit einfachen Mitteln sowie auf eine kostengünstige Art und Weise eine Unterbrechung der elektrischen Kopplung zwischen dem ersten Ableiterabschnitt und dem zweiten Ableiterabschnitt automatisch bewirkbar ist, wenn das Verhältnis zwischen Zellinnendruck und Zellaußendruck einen kritischen Grenzwert übersteigt. Durch die Wirkkopplung der Aktuatorvorrichtung mit dem Druckunterschied von Zellinnendruck und Zellaußendruck sind eine Messung des Zellinnendrucks sowie eine Steuerungsvorrichtung zum Steuern der Aktuatorvorrichtung entbehrlich. Somit ist eine Komplexität des Batteriezellensystems erheblich reduziert und eine Betriebssicherheit der Batteriezelle gegenüber herkömmlichen Batteriezellen wesentlich verbessert.

Gemäß einer bevorzugten Weiterentwicklung der Erfindung kann bei einer Batteriezelle vorgesehen sein, dass die Trennvorrichtung einen keilförmigen Querschnitt aufweist, wobei ein spitzes Keilende der Trennvorrichtung in Richtung einer Trennfuge zwischen dem ersten Ableiterabschnitt und dem zweiten Ableiterabschnitt ausgerichtet ist. Die Spitze ist vorzugsweise derart ausgerichtet, dass diese beim linearen Bewegen der Trennvorrichtung von der Ausgangsposition in Richtung der Unterbrechungsposition zwischen den ersten Ableiterabschnitt und den zweiten Ableiterabschnitt bewegt wird, um die mechanische und elektrische Kopplung zu unterbrechen. Durch Bewegen der Trennvorrichtung in die Trennfuge gerät eine erste Keilfläche der Trennvorrichtung in Kontakt mit dem ersten Ableiterabschnitt und eine zweite Keilfläche der Trennvorrichtung in Kontakt mit dem zweiten Ableiterabschnitt. Durch ein Weiterbewegen der Trennvorrichtung in Richtung der Unterbrechungsposition ist auf diese Weise eine Kraft von der Trennvorrichtung auf den ersten Ableiterabschnitt sowie den zweiten Ableiterabschnitt bewirkbar, durch welche der erste Ableiterabschnitt und der zweite Ableiterabschnitt voneinander wegdrückbar sind. Bei Erreichen der Unterbrechungsposition sind der erste Ableiterabschnitt und der zweite Ableiterabschnitt mechanisch und elektrisch voneinander entkoppelt sowie durch die Trennvorrichtung voneinander beabstandet. Dies hat den Vorteil, dass mit einfachen Mitteln sowie auf eine kostengünstige Art und Weise die mechanische sowie elektrische Kopplung zwischen dem ersten Ableiterabschnitt und dem zweiten Ableiterabschnitt zuverlässig unterbrechbar ist.

Es ist erfindungsgemäß bevorzugt, dass die Trennvorrichtung eine Schneidvorrichtung zum Durchtrennen einer mechanischen Verbindung zwischen dem ersten Ableiterabschnitt und dem zweiten Ableiterabschnitt aufweist. Die Schneidvorrichtung ist vorzugsweise derart an der Trennvorrichtung angeordnet, dass die Schneidvorrichtung bei der Bewegung von der Ausgangsposition in die Unterbrechungsposition eine Soll-Trennlinie zwischen dem ersten Ableiterabschnitt und dem zweiten Ableiterabschnitt kontaktiert und auftrennt. Die Schneidvorrichtung weist vorzugsweise eine Schneidklinge auf, welche vorzugsweise schräg zur Bewegungsrichtung der Trennvorrichtung ausgebildet ist, um maximale Schneidkräfte und somit eine erforderliche Druckkraft zum Bewegen der Trennvorrichtung in Richtung der Unterbrechungsposition zu reduzieren. Dies hat den Vorteil, dass mit einfachen Mitteln sowie auf eine kostengünstige Art und Weise eine Trennung des ersten Ableiterabschnitts vom zweiten Ableiterabschnitt verbessert ist.

Weiter bevorzugt weist die Schneidvorrichtung einen härteren Werkstoff als ein der Schneidvorrichtung benachbarter Bereich der Trennvorrichtung auf. Die Schneidvorrichtung weist vorzugsweise ein Metall, Hartkeramik oder dergleichen auf. Ferner ist es bevorzugt, dass die Schneidvorrichtung eine geringere Dicke als der benachbarte Bereich aufweist, um ein Eindringen in den Werkstoff der Ableitervorrichtung zu verbessern. Vorzugsweise ist die Schneidvorrichtung durch Beschichten, Umformen, Kleben oder dergleichen an einem Grundkörper der Trennvorrichtung angeordnet. Bei einer Schneidvorrichtung aus einem elektrisch leitenden Material ist es bevorzugt, dass die Trennvorrichtung ausgebildet ist, die Schneidvorrichtung in die Unterbrechungsposition weit genug vom ersten Ableiterabschnitt und/oder zweiten Ableiterabschnitt wegzubewegen, sodass ein Stromfluss, Lichtbogen oder dergleichen zwischen dem ersten Ableiterabschnitt und dem zweiten Ableiterabschnitt über die Schneidvorrichtung vermieden ist. Dies hat den Vorteil, dass mit einfachen Mitteln sowie auf eine kostengünstige Art und Weise ein Abtrennen des ersten Ableiterabschnitts vom zweiten Ableiterabschnitt verbessert ist.

In einer besonders bevorzugten Ausgestaltung der Erfindung kann bei einer Batteriezelle vorgesehen sein, dass die Trennvorrichtung zum Bewegen zwischen den ersten Ableiterabschnitt und den zweiten Ableiterabschnitt über eine Linearführung linear geführt ist. Die Linearführung weist vorzugsweise eine Schiene auf, an welcher die Trennvorrichtung vorzugsweise anliegt und/oder welche von der Trennvorrichtung zumindest teilweise umgeben ist. Alternativ oder zusätzlich weist die Linearführung einen sich in eine Führungsrichtung der Linearführung erstreckenden Hohlkörper, wie beispielsweise einen Hohlzylinder, Hohlquader, Halbrundkanal oder dergleichen auf, in welchem die Trennvorrichtung angeordnet und linear geführt ist. Dies hat den Vorteil, dass mit einfachen Mitteln sowie auf eine kostengünstige Art und Weise ein Verkanten der Trennvorrichtung bei der Bewegung in die Unterbrechungsposition und somit eine sichere Bewegung der Trennvorrichtung in die Unterbrechungsposition gewährleistet ist. Auf diese Weise ist ein bestimmungsgemäßes Trennen des ersten Ableiterabschnitts vom zweiten Ableiterabschnitt sichergestellt.

Vorzugsweise ist die Trennvorrichtung aus einem elektrisch isolierenden Material gebildet oder weist ein elektrisch isolierendes Material auf. Das elektrisch isolierende Material ist vorzugsweise durch Beschichten, Umformen, Kleben oder dergleichen auf einem Grundkörper der Trennvorrichtung angeordnet. Die Trennvorrichtung ist vorzugsweise derart ausgebildet, dass das isolierende Material in der Unterbrechungsposition zwischen dem ersten Ableiterabschnitt und dem zweiten Ableiterabschnitt derart angeordnet ist, dass eine elektrische Kopplung zwischen dem ersten Ableiterabschnitts und dem zweiten Ableiterabschnitt zuverlässig vermieden ist. Hierunter fällt vorzugsweise auch eine durch Erschütterung, Vibration oder dergleichen hervorrufbare spontane elektrische Kopplung. Demnach ist die Trennvorrichtung vorzugsweise derart ausgebildet, dass das isolierende Material in der Unterbrechungsposition den ersten Ableiterabschnitt und den zweiten Ableiterabschnitt kontaktiert und voneinander beabstandet hält. Dies hat den Vorteil, dass mit einfachen Mitteln sowie auf eine kostengünstige Art und Weise eine sichere elektrische Trennung der Batteriezelle von weiteren Komponenten des Batteriesystems bewirkbar ist.

Gemäß einer bevorzugten Ausführungsform der Erfindung weist die Aktuatorvorrichtung ein Rückziehmittel zum Bereitstellen einer vom Druckunterschied abhängigen Gegenkraft zum Druckunterschied und/oder ein Rückhaltemittel zum Bereitstellen einer Haltekraft zum Halten der Trennvorrichtung auf. Das Rückziehmittel weist vorzugsweise eine Federvorrichtung auf.

Vorzugsweise ist das Rückziehmittel in der Ausgangsposition entspannt und durch Bewegen der Trennvorrichtung in Richtung der Unterbrechungsposition spannbar, sodass hierdurch eine Rückstellkraft in Richtung der Ausgangsposition bewirkbar ist. Das Rückziehmittel weist vorzugsweise eine definierte, auf das Weg-Kraft-Niveau angepasste Kennlinie, insbesondere Federkennlinie, auf. Vorzugsweise ist eine Vorspannung bzw. initiale Rückstellkraft in der Ausgangslage anpassbar ausgebildet. Das Rückziehmittel ist vorzugsweise derart dimensioniert, dass die Trennvorrichtung erst bei Erreichen des vorgegebenen Druckschwellwerts die Unterbrechungsposition erreicht. Das Rückhaltemittel weist vorzugsweise eine Reibfläche und/oder einen Brechbolzen und/oder eine Sollbruchstelle und/oder eine Haftschicht und/oder eine Klebeschicht oder dergleichen auf. Das Rückhaltemittel ist vorzugsweise zum Bereitstellen einer statischen Haltekraft ausgebildet. Vorzugsweise ist das Rückhaltemittel ausgebildet, die Trennvorrichtung bei einem Druckunterschied unterhalb des Druckschwellwerts in der Ausgangsposition zu halten und die Trennvorrichtung bei Erreichen des Druckschwellwerts freizugeben, beispielsweise durch Versagen des Brechbolzens, der Sollbruchstelle oder der Klebeschicht. Alternativ kann das Rückhaltemittel erfindungsgemäß ausgebildet sein, die Bewegung der Trennvorrichtung derart zu behindern, dass ein Erreichen der Unterbrechungsposition bei einem Zellinnendruck unterhalb des Druckschwellwerts vermieden ist. Dies hat den Vorteil, dass mit einfachen Mitteln sowie auf eine kostengünstige Art und Weise eine bedarfsgerechte Trennung der elektrischen Kopplung gewährleistet ist.

Besonders bevorzugt weist die Aktuatorvorrichtung ein Sperrmittel zum Sperren einer Rückziehbewegung der Trennvorrichtung in Richtung der Ausgangsposition auf. Das Sperrmittel weist vorzugsweise ein Rastmittel, eine Sperrklinke, Sperrzähne oder dergleichen auf. Das Sperrmittel ist vorzugsweise ausgebildet, die Bewegungsrichtung der Trennvorrichtung derart zu begrenzen, dass lediglich eine Bewegung der Trennvorrichtung in Richtung der Unterbrechungsposition zugelassen ist. Hierdurch ist ein, insbesondere translatorisches, Schwingen der Trennvorrichtung, beispielsweise in Folge einer Erregerschwingung, einer Erschütterung oder dergleichen, vermeidbar. Zusätzlich oder alternativ ist das Sperrmittel ausgebildet, die Trennvorrichtung in der Unterbrechungsposition zu halten. Somit ist vermeidbar, dass nach Trennen der elektrischen Kopplung zwischen dem ersten Ableiterabschnitt und dem zweiten Ableiterabschnitt die Trennvorrichtung die Unterbrechungsposition verlässt und die elektrische Kopplung wiederhergestellt wird. Dies hat den Vorteil, dass mit einfachen Mitteln sowie auf eine kostengünstige Art und Weise die Betriebssicherheit der Batteriezelle verbessert ist.

Gemäß einem zweiten Aspekt der Erfindung wird die Aufgabe durch ein Batteriesystem für ein Kraftfahrzeug gelöst. Das Batteriesystem weist ein Systemgehäuse auf. Erfindungsgemäß sind innerhalb des Systemgehäuses mehrere erfindungsgemäße Batteriezellen angeordnet. Das Systemgehäuse ist vorzugsweise aus einem verhältnismäßig steifen Material gebildet, um den Batteriezellen einen Schutz vor äußeren mechanischen Einflüssen, wie beispielsweise in Folge einer Kollision des Kraftfahrzeugs, bereitzustellen. Die Batteriezellen sind vorzugsweise miteinander elektrisch verschaltet, beispielsweise in einer Reihenschaltung und/oder Parallelschaltung. Die Batteriezellen sind vorzugsweise zu einem oder mehreren Batteriezellenstapeln zusammengefasst. Überdies weist das Batteriesystem vorzugsweise für einen oder mehrere, vorzugsweise sämtliche Batteriezellenstapel eine Druckvorrichtung zum Zusammendrücken der Batteriezellen des jeweiligen Batteriezellenstapels auf. Das Batteriesystem weist vorzugsweise zwei oder mehrere Hauptableiter zum elektrischen Koppeln des Batteriesystems mit dem Kraftfahrzeug auf. Das Batteriesystem ist vorzugsweise zum Betreiben eines Elektromotors und einer Leistungselektronik des Kraftfahrzeugs ausgebildet.

Bei dem erfindungsgemäßen Batteriesystem ergeben sich sämtliche Vorteile, die bereits zu einer Batteriezelle gemäß dem ersten Aspekt der Erfindung beschrieben worden sind.

Demnach hat das erfindungsgemäße Batteriesystem gegenüber herkömmlichen Batteriesystemen den Vorteil, dass mit einfachen Mitteln sowie auf eine kostengünstige Art und Weise eine Unterbrechung der elektrischen Kopplung zwischen dem ersten Ableiterabschnitt und dem zweiten Ableiterabschnitt der Batteriezellen automatisch bewirkbar ist, wenn das Verhältnis zwischen Zellinnendruck und Zellaußendruck einen kritischen Grenzwert übersteigt. Durch die Wirkkopplung der Aktuatorvorrichtung mit dem Druckunterschied von Zellinnendruck und Zellaußendruck sind eine Messung des Zellinnendrucks sowie eine Steuerungsvorrichtung zum Steuern der Aktuatorvorrichtung entbehrlich. Somit ist eine Komplexität des Batteriezellensystems erheblich reduziert und eine Betriebssicherheit der Batteriezellensystems gegenüber herkömmlichen Batteriezellensystemen wesentlich verbessert.

Gemäß einem dritten Aspekt der Erfindung wird die Aufgabe durch ein Kraftfahrzeug gelöst. Das Kraftfahrzeug weist ein elektrisches Antriebssystem mit einem Elektromotor zum Antreiben des Kraftfahrzeugs auf. Erfindungsgemäß weist das Antriebssystem zum Versorgen des Elektromotors mit elektrischer Energie ein erfindungsgemäßes Batteriesystem auf. Das Batteriesystem ist mit dem Elektromotor elektrisch gekoppelt, vorzugsweise über eine Leistungselektronik zum Betreiben des Elektromotors. Erfindungsgemäß kann das Kraftfahrzeug mehrere Elektromotoren zum Antreiben des Kraftfahrzeugs aufweisen, insbesondere einen Elektromotor zum Antreiben einer Vorderachse des Kraftfahrzeugs und einen Elektromotor zum Antreiben einer Hinterachse des Kraftfahrzeugs.

Bei dem erfindungsgemäßen Kraftfahrzeug ergeben sich sämtliche Vorteile, die bereits zu einer Batteriezelle gemäß dem ersten Aspekt der Erfindung sowie zu einem Batteriesystem gemäß dem zweiten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise eine Unterbrechung der elektrischen Kopplung zwischen dem ersten Ableiterabschnitt und dem zweiten Ableiterabschnitt der Batteriezellen automatisch bewirkbar ist, wenn das Verhältnis zwischen Zellinnendruck und Zellaußendruck einen kritischen Grenzwert übersteigt. Durch die Wirkkopplung der Aktuatorvorrichtung mit dem Druckunterschied von Zellinnendruck und Zellaußendruck sind eine Messung des Zellinnendrucks sowie eine Steuerungsvorrichtung zum Steuern der Aktuatorvorrichtung entbehrlich. Somit ist eine Komplexität des Kraftfahrzeugs erheblich reduziert und eine Betriebssicherheit des Kraftfahrzeugs gegenüber herkömmlichen Kraftfahrzeugen wesentlich verbessert.

Eine erfindungsgemäße Batteriezelle, ein erfindungsgemäßes Batteriesystem sowie ein erfindungsgemäßes Kraftfahrzeug werden nachfolgend anhand von Zeichnungen näher erläutert. Es zeigen jeweils schematisch:
- Figur 1: in einer perspektivischen Ansicht eine Batteriezelle gemäß einer bevorzugten ersten Ausführungsform der Erfindung in einer Ausgangsposition,
- Figur 2: in einer Schnittdarstellung einen Ausschnitt der Batteriezelle aus Figur 1 in der Ausgangsposition,
- Figur 3: in einer Schnittdarstellung einen Ausschnitt der Batteriezelle aus Figur 1 in einer Unterbrechungsposition,
- Figur 4: in einer Schnittdarstellung einen Ausschnitt einer Batteriezelle gemäß einer bevorzugten zweiten Ausführungsform der Erfindung in einer Ausgangsposition,
- Figur 5: in einer perspektivischen Ansicht einen Ausschnitt einer Batteriezelle gemäß einer bevorzugten dritten Ausführungsform,
- Figur 6: in einer Schnittdarstellung ein Batteriesystem gemäß einer bevorzugter Ausführungsform der Erfindung, und
- Figur 7: in einer Seitenansicht eine bevorzugte Ausführungsform eines erfindungsgemäßen Kraftfahrzeugs.

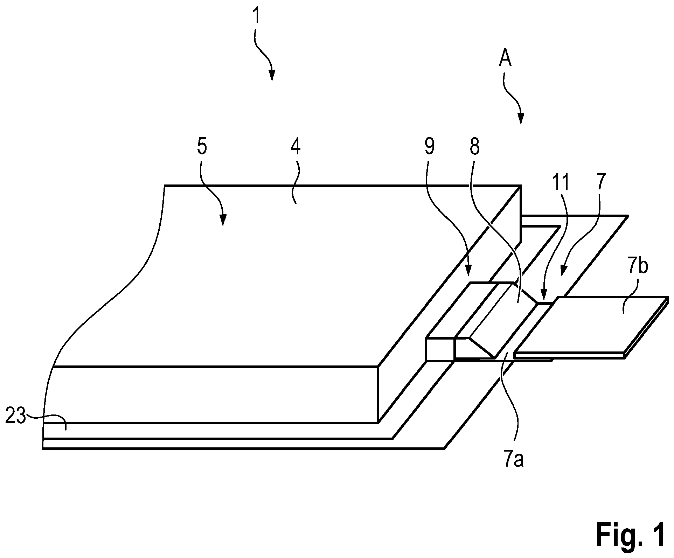

Elemente mit gleicher Funktion und Wirkungsweise sind in den Figuren 1 bis 7 jeweils mit denselben Bezugszeichen versehen.

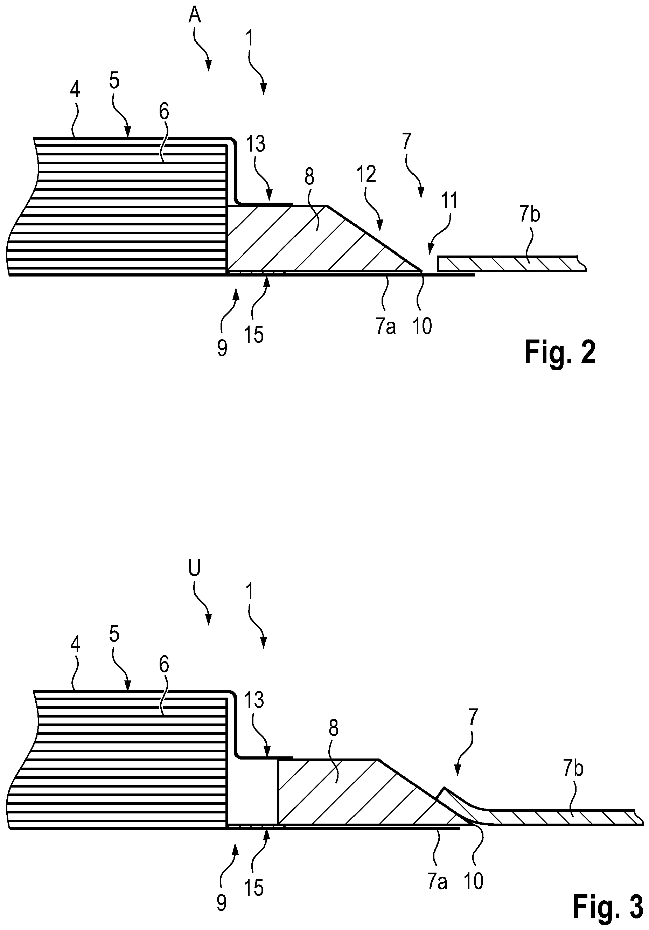

In Fig. 1 ist eine Batteriezelle 1 gemäß einer bevorzugten ersten Ausführungsform der Erfindung in der Ausgangsposition A schematisch in einer perspektivischen Ansicht abgebildet. Die Batteriezelle 1 ist als Pouchzelle ausgebildet und weist eine flexible Zellwandung 4 auf, die in einem Randbereich eine umlaufende Naht 23 aufweist und einen Zellinnenraum 5 umgibt. Auf einer Seite der Batteriezelle 1 ist eine Ableitervorrichtung 7 aus dem Zellinnenraum 5 herausgeführt. Die Ableitervorrichtung 7 weist einen in den Zellinnenraum 5 hineinragenden ersten Ableiterabschnitt 7a und einen außerhalb des Zellinnenraums 5 angeordneten, sowie mit dem ersten Ableiterabschnitt 7a über einen Überlappungsbereich unter Ausbildung einer Trennfuge 11 mechanisch und elektrisch gekoppelten zweiten Ableiterabschnitt 7b auf. Zudem ragt aus dem Zellinnenraum 5 eine Trennvorrichtung 8 zum mechanischen sowie elektrischen Trennen des ersten Ableiterabschnitts 7a vom zweiten Ableiterabschnitt 7b heraus. Die Trennvorrichtung 8 ist in der Ausgangsposition A dargestellt und mittels einer Aktuatorvorrichtung 9 unter Ausnutzung eines Druckunterschieds von einem Zellinnendruck im Zellinnenraum 5 und einem geringeren Zellaußendruck außerhalb des Zellinnenraums 5 in eine Unterbrechungsposition U (vgl. Fig. 3) bewegbar. In der Ausgangsposition A ist die Trennvorrichtung vom Überlappungsbereich beabstandet angeordnet und der Trennfuge 11 zugewandt.

Fig. 2 zeigt einen Ausschnitt der Batteriezelle 1 aus Fig. 1 in der Ausgangsposition A schematisch in einer Schnittdarstellung. In dieser Ansicht ist ein im Zellinnenraum 5 angeordneter Stapel aus Aktivmaterial 6 dargestellt, welcher mit dem ersten Ableiterabschnitt 7a elektrisch gekoppelt ist. Die Trennvorrichtung 8 ist über eine Linearführung 13 entlang dem ersten Ableiterabschnitt 7a linear geführt und weist eine keilförmig ausgebildete Schneidvorrichtung 12 auf. Ein Keilende 10 der Schneidvorrichtung 12 ist der Trennfuge 11 benachbart angeordnet und zugewandt. Über als Klebestelle ausgebildete Rückhaltemittel 15 ist die Trennvorrichtung 8 in der Ausgangsposition A am ersten Ableiterabschnitt 7a gehalten. Vorzugsweise ist die Zellwandung 4 zur Trennvorrichtung 8 über eine nicht dargestellte Dichtvorrichtung abgedichtet, um ein Austreten von Zellgas aus dem Zellinnenraum 5 zu vermeiden. Die Aktuatorvorrichtung 9 ist ausgebildet, die Trennvorrichtung 8 bei einem Druckunterschied zwischen dem Zellinnendruck und dem Zellaußendruck, der einen Druckschwellwert übersteigt, durch Ausnutzung des Zellinnendrucks unter Überwindung des Rückhaltemittels 15 aus der Ausgangsposition A in die Unterbrechungsposition U zu bewegen.

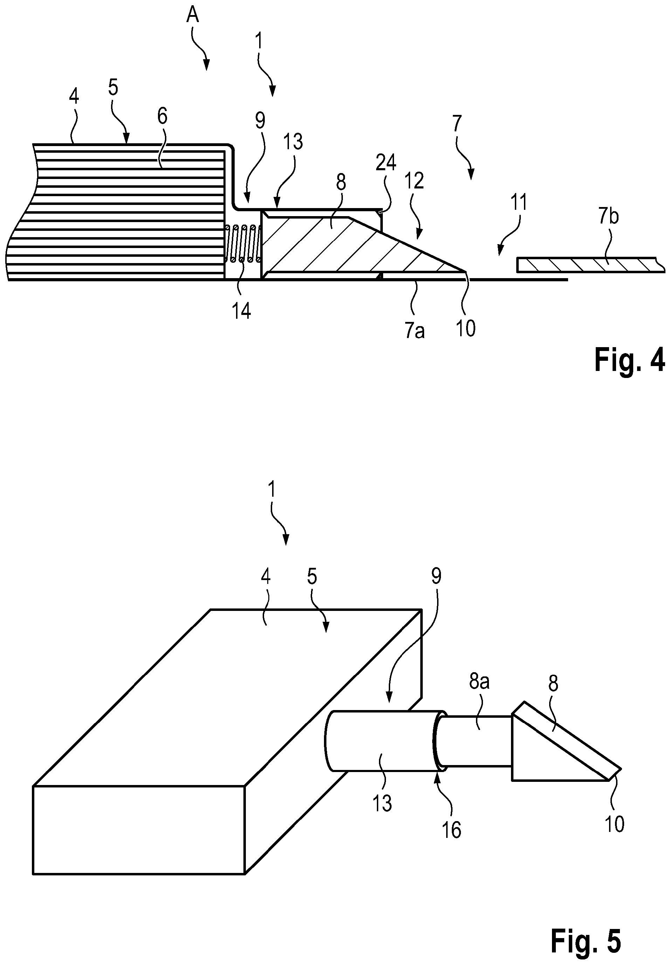

In Fig. 3 ist ein Ausschnitt der Batteriezelle 1 aus Fig. 1 in der Unterbrechungsposition U schematisch in einer Schnittdarstellung dargestellt. In der Unterbrechungsposition U ist das Keilende 10 der Trennvorrichtung 8 derart zwischen den ersten Ableiterabschnitt 7a und den zweiten Ableiterabschnitt 7b der Ableitervorrichtung 7 bewegt, dass die mechanische sowie elektrische Kopplung des ersten Ableiterabschnitts 7a mit dem zweiten Ableiterabschnitt 7b unterbrochen ist. Die Batteriezelle 1 ist somit elektrisch vom Batteriesystem 2 (vgl. Fig. 5) entkoppelt.

Fig. 4 zeigt einen Ausschnitt einer Batteriezelle 1 gemäß einer bevorzugten zweiten Ausführungsform der Erfindung in einer Ausgangsposition A schematisch in einer Schnittdarstellung. In dieser zweiten Ausführungsform weist die Aktuatorvorrichtung 9 ein als Schraubenfeder ausgebildetes Rückziehmittel 14 auf. Über das Rückziehmittel 14 ist ein Bewegen der Trennvorrichtung 8 in Richtung der Trennfuge 11 derart beinflussbar, dass die Trennvorrichtung erst bei Erreichen des Druckschwellwerts in der Unterbrechungsposition U angeordnet ist. An der Linearführung 13 ist ein Endanschlag 24 angeordnet, um ein Herausbewegen der Trennvorrichtung 8 jenseits der Unterbrechungsposition U formschlüssig zu vermeiden. In dieser Ausführungsform ist die Linearführung 13 zudem als Sensorik zum Detektieren der Unterbrechungsposition U ausgebildet.

In Fig. 5 ist ein Ausschnitt einer Batteriezelle 1 gemäß einer bevorzugten dritten Ausführungsform schematisch in einer perspektivischen Ansicht abgebildet. Die Linearführung 13 ist als Hohlzylinder ausgebildet, wobei die Trennvorrichtung 8 einen in dem Hohlzylinder linear geführten zylinderförmigen Abschnitt 8a aufweist. Innerhalb der Linearführung 13 ist ein in dieser Ansicht verdecktes Sperrmittel 16 zum Verhindern einer Rückziehbewegung der Trennvorrichtung 8 in Richtung der Ausgangsposition A angeordnet. Die Ableitervorrichtung 7 ist in dieser Darstellung nicht mit abgebildet.

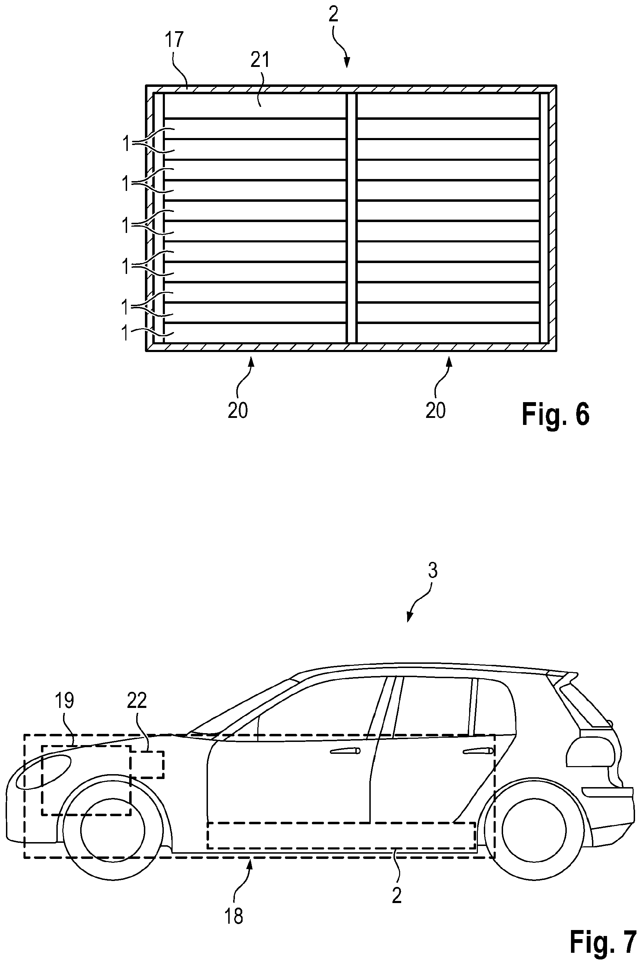

Fig. 6 zeigt ein Batteriesystem 2 gemäß einer bevorzugten Ausführungsform der Erfindung schematisch in einer Schnittdarstellung. Das Batteriesystem 2 weist eine Mehrzahl erfindungsgemäßer Batteriezellen 1 auf, die zu mehreren Zellstapeln 20 zusammengefasst und innerhalb eines Systemgehäuses 17 des Batteriesystems 2 angeordnet sind. Die Zellstapel 20 sind jeweils über eine Druckvorrichtung 21 im Systemgehäuse 17 verspannt.

In Fig. 7 ist eine bevorzugte Ausführungsform eines erfindungsgemäßen Kraftfahrzeugs 3 schematisch in einer Seitenansicht dargestellt. Das Kraftfahrzeug 3 weist ein elektrisches Antriebssystem 18 mit einem Elektromotor 19 zum Antreiben des Kraftfahrzeugs 3, einer Leistungselektronik 22 zum Steuern des Elektromotors 19 sowie einem erfindungsgemäßen Batteriesystem 2 zum Bereitstellen elektrischer Energie zum Betreiben der Leistungselektronik 22 und des Elektromotors 19 auf.

### Bezugszeichenliste

- 1: Batteriezelle
- 2: Batteriesystem
- 3: Kraftfahrzeug
- 4: Zellwandung
- 5: Zellinnenraum
- 6: Aktivmaterial
- 7: Ableitervorrichtung
- 7a: erster Ableiterabschnitt
- 7b: zweiter Ableiterabschnitt
- 8: Trennvorrichtung
- 8a: zylinderförmiger Abschnitt
- 9: Aktuatorvorrichtung
- 10: Keilende
- 11: Trennfuge
- 12: Schneidvorrichtung
- 13: Linearführung
- 14: Rückziehmittel
- 15: Rückhaltemittel
- 16: Sperrmittel
- 17: Systemgehäuse
- 18: Antriebssystem
- 19: Elektromotor
- 20: Zellstapel
- 21: Druckvorrichtung
- 22: Leistungselektronik
- 23: Naht
- 24: Endanschlag
- A: Ausgangsposition
- U: Unterbrechungsposition

## Patentansprüche

1. Batteriezelle (1) für ein Batteriesystem (2) für ein Kraftfahrzeug (3), aufweisend eine flexible Zellwandung (4), einen von der Zellwandung (4) gebildeten Zellinnenraum (5), in dem Zellinnenraum (5) angeordnetes Aktivmaterial (6) zum Speichern und Freigeben der elektrischen Energie sowie eine Ableitervorrichtung (7) zum Bereitstellen einer elektrischen Kopplung des Aktivmaterials (6) mit weiteren Komponenten des Batteriesystems (2), wobei die Ableitervorrichtung (7) einen ersten Ableiterabschnitt (7a) und einen mit dem ersten Ableiterabschnitt (7a) mechanisch sowie elektrisch gekoppelten zweiten Ableiterabschnitt (7b) aufweist,
**dadurch gekennzeichnet,**
**dass** die Batteriezelle (1) eine Trennvorrichtung (8) zum Trennen der mechanischen und elektrischen Kopplung zwischen dem ersten Ableiterabschnitt (7a) und dem zweiten Ableiterabschnitt (7b) sowie eine Aktuatorvorrichtung (9) zum Bewegen der Trennvorrichtung (8) aufweist, wobei die Aktuatorvorrichtung (9) ausgebildet ist, die Trennvorrichtung (8) unter Ausnutzung eines positiven Druckunterschieds zwischen einem Zellinnendruck im Zellinnenraum (5) und einem geringeren Zellaußendruck außerhalb des Zellinnenraums (5) von einer Ausgangsposition (A) in eine Unterbrechungsposition (U) zwischen den ersten Ableiterabschnitt (7a) und den zweiten Ableiterabschnitt (7b) zu bewegen.

2. Batteriezelle (1) nach Anspruch 1,
**dadurch gekennzeichnet,**
**dass** die Trennvorrichtung (8) einen keilförmigen Querschnitt aufweist, wobei ein spitzes Keilende (10) der Trennvorrichtung (8) in Richtung einer Trennfuge (11) zwischen dem ersten Ableiterabschnitt (7a) und dem zweiten Ableiterabschnitt (7b) ausgerichtet ist.

3. Batteriezelle (1) nach Anspruch 1 oder 2,
**dadurch gekennzeichnet,**
**dass** die Trennvorrichtung (8) eine Schneidvorrichtung (12) zum Durchtrennen einer mechanischen Verbindung zwischen dem ersten Ableiterabschnitt (7a) und dem zweiten Ableiterabschnitt (7b) aufweist.

4. Batteriezelle (1) nach Anspruch 3,
**dadurch gekennzeichnet,**
**dass** die Schneidvorrichtung (12) einen härteren Werkstoff als ein der Schneidvorrichtung (12) benachbarter Bereich der Trennvorrichtung (8) aufweist.

5. Batteriezelle (1) nach wenigstens einem der vorangegangenen Ansprüche,
**dadurch gekennzeichnet,**
**dass** die Trennvorrichtung (8) zum Bewegen zwischen den ersten Ableiterabschnitt (7a) und den zweiten Ableiterabschnitt (7b) über eine Linearführung (13) linear geführt ist.

6. Batteriezelle (1) nach wenigstens einem der vorangegangenen Ansprüche,
**dadurch gekennzeichnet,**
**dass** die Trennvorrichtung (8) aus einem elektrisch isolierenden Material gebildet ist oder ein elektrisch isolierendes Material aufweist.

7. Batteriezelle (1) nach wenigstens einem der vorangegangenen Ansprüche,
**dadurch gekennzeichnet,**
**dass** die Aktuatorvorrichtung (9) ein Rückziehmittel (14) zum Bereitstellen einer vom Druckunterschied abhängigen Gegenkraft zum Druckunterschied und/oder ein Rückhaltemittel (15) zum Bereitstellen einer Haltekraft zum Halten der Trennvorrichtung (8) aufweist.

8. Batteriezelle (1) nach wenigstens einem der vorangegangenen Ansprüche,
**dadurch gekennzeichnet,**
**dass** die Aktuatorvorrichtung (9) ein Sperrmittel (16) zum Sperren einer Rückziehbewegung der Trennvorrichtung (8) in Richtung der Ausgangsposition (A) aufweist.

9. Batteriesystem (2) für ein Kraftfahrzeug (3), aufweisend ein Systemgehäuse (17),
**dadurch gekennzeichnet,**
**dass** im Systemgehäuse (17) mehrere Batteriezellen (1) nach einem der vorangegangenen Ansprüche angeordnet sind.

10. Kraftfahrzeug (3), aufweisend ein elektrisches Antriebssystem (18) mit einem Elektromotor (19) zum Antreiben des Kraftfahrzeugs (3),
**dadurch gekennzeichnet,**
**dass** das Antriebssystem (18) zum Versorgen des Elektromotors (19) mit elektrischer Energie ein Batteriesystem (2) nach Anspruch 9 aufweist.
